# FASCICULE DE BREVET EUROPEEN

(11) **EP 2 449 265 B1**
(45) Date de publication et mention de la délivrance du brevet: **28.09.2016**
(21) Numéro de dépôt: 10726997.9
(22) Date de dépôt: 02.07.2010
(51) Int. Cl.: F04D 29/32, B64C 11/02, F01D 5/02, F01D 21/04

(54) **MOYEU D'HÉLICE**
PROPELLERNABE
PROPELLER HUB

(30) Priorité: 02.07.2009 FR 0954561
(43) Date de publication de la demande: 09.05.2012
(73) Titulaire: Safran Aircraft Engines, 75015 Paris (FR)
(72) Inventeur: BOSTON, Eric, Jacques, F-77240 Cesson (FR); BOURU, Michel, André, F-77950 Montereau Sur Le Jard (FR); JABLONSKI, Laurent, F-77000 Melun (FR); JOLY, Philippe, Gérard, Edmond, F-77000 Vaux Le Penil (FR)
(74) Mandataire: Gevers & Orès
(86) Numéro de dépôt international: PCT/EP2010/059467
(87) Numéro de publication internationale: WO 2011/000943

(56) Documents cités:
- FR-A1- 2 641 251
- US-A- 5 224 831

## Description

La présente invention concerne un moyeu d'hélice à pales à calage variable pour une turbomachine du type à soufflante non carénée (en anglais « open rotor » ou « unducted fan »).

La soufflante d'une turbomachine de ce type comprend typiquement deux hélices externes coaxiales et contrarotatives, respectivement amont et aval, qui sont chacune entraînées en rotation par une turbine de la turbomachine et qui s'étendent sensiblement radialement à l'extérieur de la nacelle de cette turbomachine.

Chaque hélice comprend un moyeu comportant un anneau polygonal avec des logements cylindriques sensiblement radiaux répartis autour de l'axe longitudinal de la turbomachine et dans lesquels sont les pales de l'hélice. Le moyeu comporte en outre un élément de rotor de la turbine et une bride de maintien reliant l'anneau polygonal à l'élément de rotor.

Les pales peuvent tourner dans les logements de l'anneau polygonal et sont entraînées en rotation autour des axes des pales par des moyens appropriés de façon à régler le calage angulaire des pales, et à l'optimiser en fonction des conditions de fonctionnement de la turbomachine.

En fonctionnement, les pales de l'hélice sont soumises à des forces centrifuges très importantes pouvant atteindre 30 000 daN, ces forces étant transmises à l'anneau polygonal. En cas de rupture de l'anneau polygonal, les pales pourraient se libérer, causant des dommages structuraux très importants autour de la turbomachine.

L'invention a notamment pour but d'apporter une solution simple, efficace et économique à ce problème.

Elle a pour objet un moyeu d'hélice du type précité intégrant une sécurité contre les défaillances de l'anneau polygonal.

Le document FR 2 641 251 A1 propose à cet effet un moyeu d'hélice à pales à calage variable pour une turbomachine, le moyeu comportant un anneau polygonal avec des logements cylindriques sensiblement radiaux répartis autour d'un axe central de l'anneau pour recevoir lesdites pales, un élément de rotor de turbine de la turbomachine, et une bride de maintien fixée à l'anneau de manière à le relier à l'élément de rotor, et une pluralité de crochets de rétention de secours reçus avec jeu dans des orifices, les crochets de rétention de secours étant liés à l'un de l'anneau ou de l'élément de rotor, et les orifices à l'autre.

En cas de rupture ou déformation radiale de l'anneau polygonal et/ou de la bride de maintien, lesdits crochets de rétention de secours reprennent l'effort radial, assurant ainsi au moins la rétention de l'anneau et limitant les dégâts potentiels de cette défaillance.

Les orifices divulgués par FR 2 641 251 A1 sont des rainures circonférentielles pénétrées par les crochets dans une direction radiale. Ces rainures sont donc essentiellement des orifices radiaux. L'engagement entre ces orifices et ces crochets ne peut pas résister à un couple de rotation autour d'un axe parallèle à l'axe central.

L'invention propose d'améliorer ce dispositif de rétention de secours en orientant lesdits orifices de telle sorte qu'ils soient sensiblement parallèles à l'axe central.

Avantageusement, lesdits crochets de rétention de secours sont tenus par des plaques radiales aptes à être fixées audit élément de rotor.

Dans un premier mode de réalisation chaque plaque radiale porte au moins deux clavettes, ayant une section sensiblement circulaire, formant des crochets de rétention de secours.

Dans un deuxième mode de réalisation, lesdits crochets de rétention de secours présentent une section non-ronde, tout comme lesdits orifices.

Dans un cas comme dans l'autre, lesdits crochets de rétention de secours peuvent être rapportés sur lesdites plaques radiales ou bien être formés d'une seule pièce avec lesdites plaques.

Dans les deux cas, les crochets de rétention de secours limitent autant la translation que la rotation d'un secteur de l'anneau polygonal par rapport à la plaque radiale correspondante dans un plan radial de l'anneau polygonal.

Avantageusement, ladite bride de maintien est fixée sur un côté de l'anneau, et lesdites plaques sont placées d'un coté axialement opposé à l'anneau, de manière à limiter le déplacement axial de l'anneau.

Avantageusement, ledit moyeu comporte en outre des moyens de fixation axiaux desdits crochets dans une direction parallèle à l'axe central de l'anneau, tels que, par exemple des boulons reliant les plaques à l'élément de rotor orientés parallèlement à l'axe central de l'anneau.

Plus particulièrement, lesdites plaques comportent un relief permettant un engagement positif dans un plan radial avec un support desdites plaques. Cet engagement positif bloque ainsi le déplacement des plaques dans un plan radial tant que les plaques sont retenues contre leur support par lesdits moyens de fixation axiaux. Cet engagement peut par exemple être formé par une saillie centrale dans le support engageant une encoche centrale dans la plaque, et deux saillies latérales dans le support engageant chacune un bord latéral de la plaque.

Des détails concernant l'invention sont décrits ci-après faisant référence aux dessins.
La figure 1 illustre une turbomachine du type à hélices non carénées.
La figure 2 illustre en perspective un anneau polygonal de rétention de pales d'hélices non carénées suivant l'état de la technique.
La figure 3 montre une vue de face de l'anneau polygonal d'un moyeu d'hélice suivant un premier mode de réalisation de l'invention.
La figure 4 montre une vue de face de l'anneau polygonal d'un moyeu d'hélice suivant un deuxième mode de réalisation de l'invention.
La figure 5 montre une vue de détail de l'anneau polygonal de la figure 3 fixé sur un élément de rotor de turbomachine.
La figure 6 montre une vue de détail de l'anneau polygonal de la figure 4 fixé sur un élément de rotor de turbomachine.
La figure 7 montre une coupe longitudinale partielle de l'anneau polygonal de la figure 3 fixé sur un élément de rotor de turbomachine.
La figure 8 montre une coupe longitudinale partielle de l'anneau polygonal de la figure 4 fixé sur un élément de rotor de turbomachine.

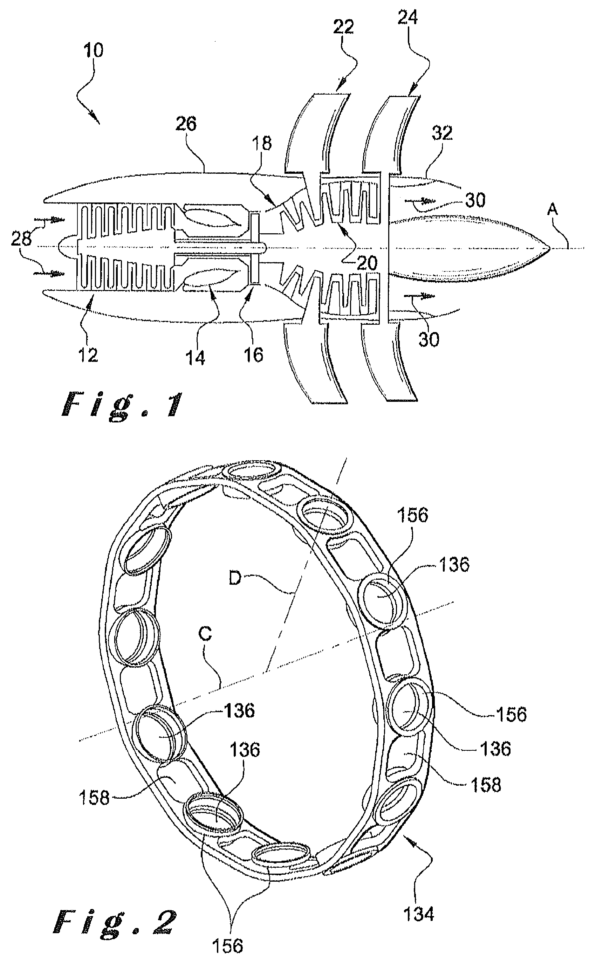

On se réfère d'abord à la figure 1 qui représente une turbomachine 10 à soufflante non carénée (en anglais « open rotor » ou « unducted fan ») qui comporte d'amont en aval, dans le sens d'écoulement des gaz à l'intérieur de la turbomachine, un compresseur 12, une chambre annulaire de combustion 14, une turbine haute pression 16, et deux turbines basse pression 18, 20 qui sont contrarotatives, c'est-à-dire qu'elles tournent dans deux sens opposés autour de l'axe longitudinal A de la turbomachine.

Chacune de ces turbines aval 18, 20 est solidaire en rotation d'une hélice externe 22, 24 s'étendant radialement à l'extérieur de la nacelle 26 de la turbomachine, cette nacelle 26 étant sensiblement cylindrique et s'étendant le long de l'axe A autour du compresseur 12, de la chambre de combustion 14, et des turbines 16, 18 et 20.

Le flux d'air 28 qui pénètre dans la turbomachine est comprimé puis est mélangé à du carburant et brûlé dans la chambre de combustion 14, les gaz de combustion passant ensuite dans les turbines pour entraîner en rotation les hélices 22, 24 qui fournissent la majeure partie de la poussée générée par la turbomachine. Les gaz de combustion sortant des turbines sont expulsés à travers une tuyère 32 (flèches 30) pour augmenter la poussée.

Les hélices 22, 24 sont disposées coaxialement l'une derrière l'autre et comportent une pluralité de pales régulièrement réparties autour de l'axe A de la turbomachine. Ces pales s'étendent sensiblement radialement et sont du type à calage variable, c'est-à-dire qu'elles peuvent tourner autour de leurs axes de façon à optimiser leur position angulaire en fonction des conditions de fonctionnement de la turbomachine.

Dans un montage précédent, chaque hélice comprend un élément de rotor formé par un anneau polygonal qui s'étend autour de l'axe A et qui comporte une pluralité de logements radiaux sensiblement cylindriques dans lesquels sont engagés des moyens de montage des pales de l'hélice. Un tel anneau polygonal 134 est illustré sur la figure 2. Il comprend des logements cylindriques 136 sensiblement radiaux et présentant des parois cylindriques 156 et une pluralité d'évidements 158 régulièrement répartis autour de l'axe central C de l'anneau et formés dans l'anneau pour l'alléger. Chaque évidement 158 est situé entre deux logements radiaux 136 consécutifs.

Un tel anneau polygonal 134 forme un point de défaillance critique pour la turbomachine. En cas de rupture de l'anneau polygonal 134 ou de sa liaison avec la turbine, les pales d'hélice pourraient se libérer et, impulsées par les forces centrifuges, générer des dommages très importants autour de la turbomachine. Des mesures doivent donc être prises pour prévenir ce risque.

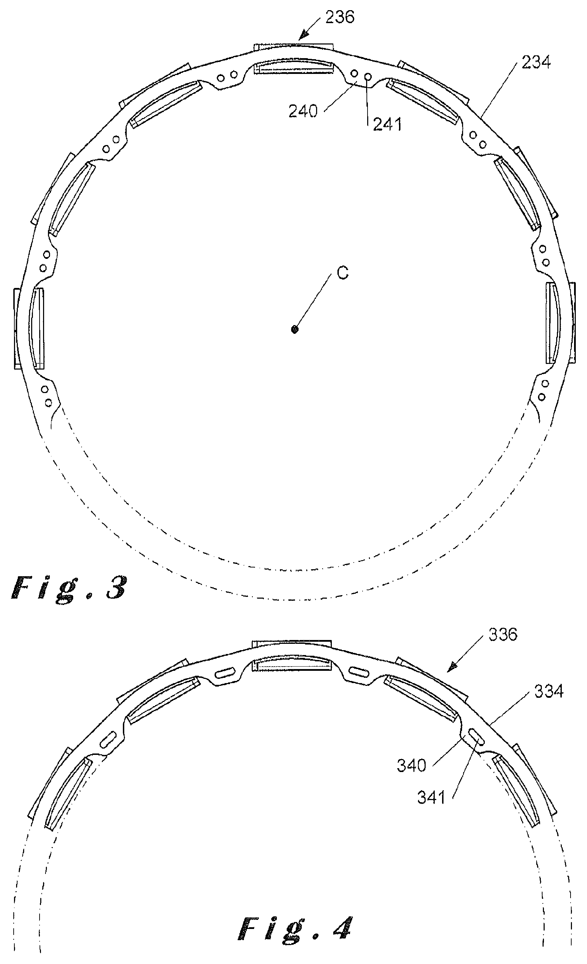

Un anneau polygonal 234 formant partie d'un moyeu d'hélice suivant un premier mode de réalisation de l'invention est illustré sur la figure 3. Comme l'anneau 134, cet anneau 234 comporte aussi des logements cylindriques 236 distribués radialement autour de l'anneau afin de recevoir les pales. Toutefois, cet anneau 234 comporte aussi des saillies radiales 240 distribuées radialement autour de l'anneau et présentant chacune deux orifices 241 cylindriques et sensiblement parallèles à l'axe central C de l'anneau. Ces saillies radiales 240 sont intercalées entre les logements cylindriques 236, de manière à ne pas interférer avec ceux-ci.

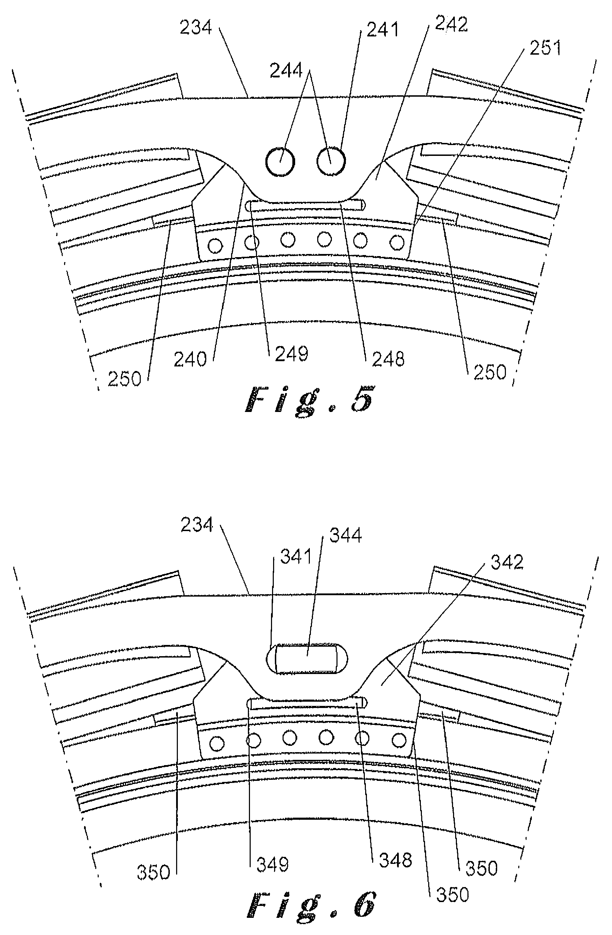

En se reportant vers la figure 5, le moyeu d'hélice suivant ce premier mode de réalisation de l'invention comporte des plaques radiales 242 destinées à être connectées à un élément de rotor de turbine 243, et portant chacune deux clavettes 244 à section ronde reçues avec jeu dans les deux orifices 241 d'une saillie radiale 240 de l'anneau 234.les clavettes forment des crochets de rétention de secours.

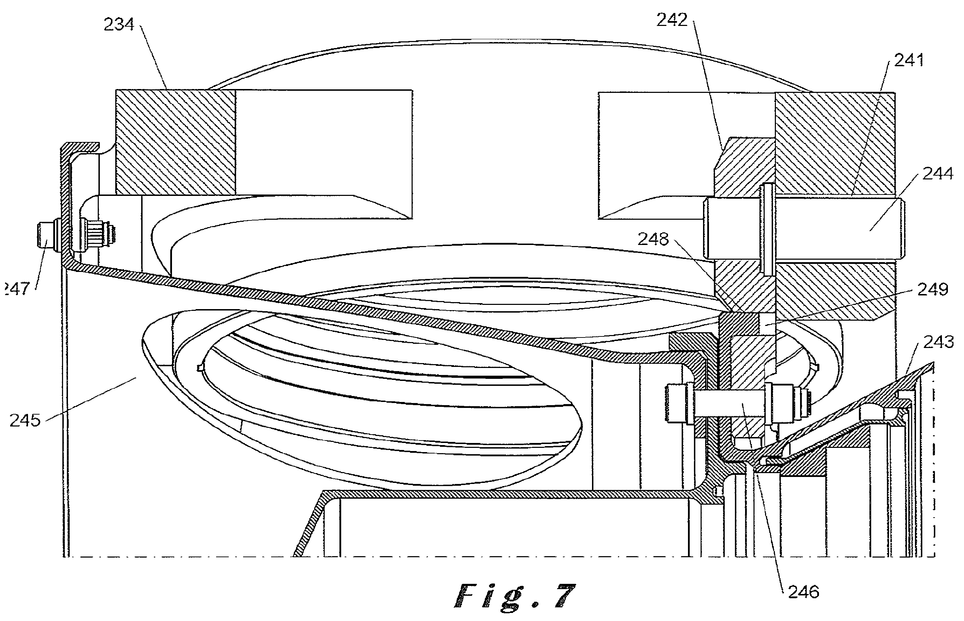

Comme illustré sur la figure 7, l'anneau 234 est lié à l'élément de rotor 243 par une bride de maintien 245. Cette bride de maintien 245 est fixée à l'élément de rotor 243 par des boulons 246, et à l'anneau 234, sur un côté axialement opposé aux plaques radiales 242, par des boulons 247.

Les plaques radiales 242 sont fixées à l'élément de rotor 243 par les mêmes boulons 246 fixant la bride de maintien 245. Ces boulons 246 sensiblement orientés dans la direction de l'axe central C de l'anneau 234. En outre, l'élément de rotor 243 présente, pour chaque plaque 242, une saillie centrale 248 engageant une encoche centrale 249 dans la plaque 242, et deux saillies latérales 250 contactant chacune un bord latéral 251 de la plaque 242. Ainsi ces saillies dans l'élément de rotor 243 forment un engagement positif avec la plaque 242 dans un plan radial perpendiculaire à l'axe central de l'anneau 234.

En fonctionnement normal, comme les clavettes 244 sont reçues avec jeu dans les orifices 241, aucun effort n'est transmis à travers les plaques 242. Tous les efforts de l'anneau 234 vers l'élément de rotor 243 sont transmis par la bride de maintien 245. Cependant, en cas de rupture ou déformation radiale sensible de l'anneau 234 et/ou de la bride de maintien 245, les clavettes 244 contactent les parois des orifices 241 et reprennent au moins une partie des efforts radiaux de rétention d'au moins une section de l'anneau 236. Les clavettes 244 forment ainsi des crochets de rétention de secours de l'anneau 236. Comme chaque plaque 242 porte deux clavettes 244 et est en engagement positif dans le plan radial avec l'élément de rotor 243, les plaques 242 peuvent transmettre audit élément de rotor 243 non seulement des forces, mais aussi des couples locaux dans le plan radial. De cette manière, les plaques 242 offrent une sécurité additionnelle contre la rupture du moyeu d'hélice suivant l'invention.

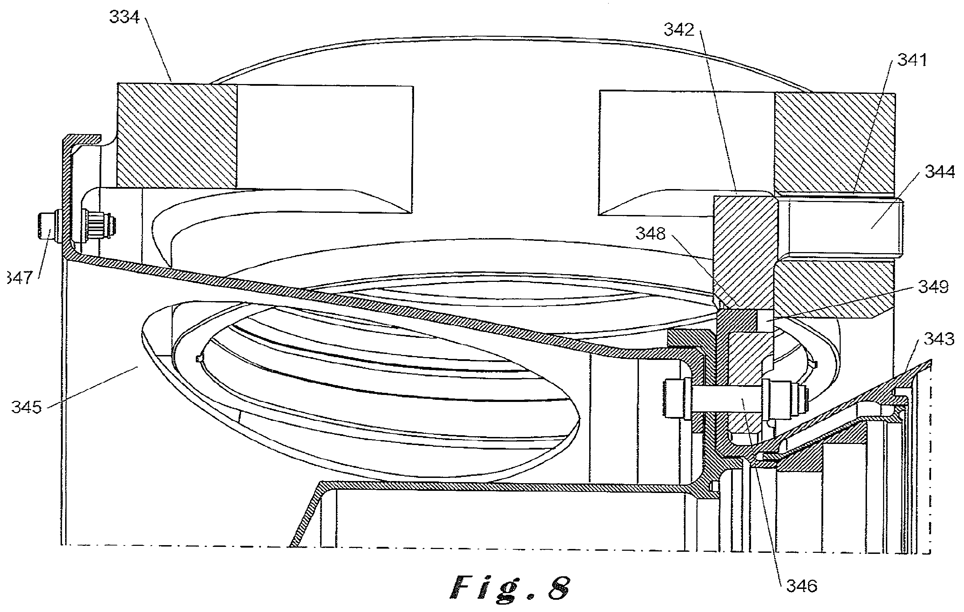

Dans un autre mode de réalisation illustré sur les figures 4, 6 et 8, les crochets de rétention de secours de l'anneau polygonal 334 ne sont pas formés par des paires de clavettes à section ronde, mais par des saillies latérales 344 des plaques radiales 342 dans la direction de l'axe central C de l'anneau polygonal 334. Les saillies latérales 344 forment une seule pièce avec les plaques 342. Ces saillies latérales 344, dont la section est rectangulaire, sont reçues avec jeu dans des orifices 341 à section allongée dans des saillies radiales 340 de l'anneau 336.

Tel qu'il est illustré sur la figure 6 et de manière analogue au premier mode de réalisation, l'anneau 334 est lié à l'élément de rotor 343 par une bride de maintien 345. Cette bride de maintien 345 est fixée à l'élément de rotor 343 par des boulons 346, et à l'anneau 334, sur un côté axialement opposé aux plaques radiales 342, par des boulons 347.

Les plaques radiales 342 sont fixées à l'élément de rotor 343 par les mêmes boulons 346 fixant la bride de maintien 345, boulons 346 sensiblement orientés dans la direction de l'axe central C de l'anneau 334. En outre, l'élément de rotor 343 présente, pour chaque plaque 342, une saillie centrale 348 engageant une encoche centrale 349 dans la plaque 342, et deux saillies latérales 350 contactant chacune un bord latéral 351 de la plaque 342. Ainsi ces saillies dans l'élément de rotor 343 forment un engagement positif avec la plaque 342 dans un plan radial perpendiculaire à l'axe central de l'anneau 334.

Comme dans le premier mode de réalisation de l'invention, les plaques 342 assurent la rétention de l'anneau 334 en cas de rupture ou déformation radiale sensible de l'anneau 336 et/ou la bride 345. Dans ce mode de réalisation, les couples locaux dans le plan radial sont transmis de l'anneau 334 aux plaques 342 par la section non-ronde des saillies 344 et des orifices 341.

Quoique la présente invention ait été décrite par référence à des exemples de réalisation spécifiques, il est évident que des différentes modifications et changements peuvent être effectués sur ces exemples sans sortir de la portée générale de l'invention telle que définie par les revendications. Par exemple, plus d'une plaque radiale pourrait être placée entre deux logements radiaux adjacents dans l'anneau polygonal. Certaines plaques radiales pourraient être placées du même côté que les fixations de l'anneau polygonal à la bride de maintien, en alternant lesdites fixations et les plaques. Les moyens de rétention de secours pourraient aussi être couplés à l'anneau plutôt qu'à l'élément de rotor, et les orifices les recevant être alors couplés à l'élément de rotor plutôt qu'à l'anneau. Par conséquent, la description et les dessins doivent être considérés dans un sens illustratif plutôt que restrictif.

## Revendications

1. Moyeu d'hélice à pales à calage variable pour une turbomachine, comportant :
• un anneau polygonal (234,334) avec des logements cylindriques (236,336) sensiblement radiaux répartis autour d'un axe central (C) de l'anneau (234) pour recevoir lesdites pales,
• un élément de rotor (243,343) de turbine de la turbomachine,
• une bride de maintien (245,345) fixée à l'anneau de manière à le relier audit élément de rotor (243,343),
et une pluralité de crochets de rétention de secours (244,344) reçus avec jeu dans des orifices (241,341), les crochets de rétention de secours (244,344) étant liés à l'un de l'anneau (234,334) ou de l'élément de rotor (243,343), et les orifices (241,341) à l'autre,
le moyeu étant **caractérisé par le fait que** les orifices (241, 341) sont sensiblement parallèles à l'axe central (C).

2. Moyeu selon la revendication 1, dans lequel lesdits crochets de rétention de secours (244,344) sont tenus par des plaques radiales (242,342) fixées audit élément de rotor (243,343).

3. Moyeu suivant la revendication 2, dans lequel chaque plaque radiale (242) porte au moins deux clavettes formant crochets de rétention de secours (244) et ayant une section sensiblement circulaire.

4. Moyeu suivant la revendication 2, lesdits crochets de rétention de secours (344) présentent une section non-ronde, tout comme lesdits orifices (341).

5. Moyeu suivant la revendication 2, dans lequel ladite bride de maintien (245,345) est fixée sur un côté de l'anneau (234,334), et lesdites plaques (242,342) sont placées d'un coté axialement opposé dudit anneau (234,334).

6. Moyeu suivant la revendication 2, comportant en outre des moyens de fixation (246,346) desdites plaques (242,342) dans une direction parallèle audit axe central (C) de l'anneau.

7. Moyeu suivant la revendication 6, dans lequel lesdites plaques (242,342) comportent un relief permettant un engagement positif dans un plan radial avec un support desdites plaques (242,342).

8. Hélice (22,24) comportant un moyeu suivant une quelconque des revendications précédentes, et des pales reçues dans les logements cylindriques (236,336).

9. Turbomachine (10) comportant au moins une hélice (22,24) suivant la revendication 8.

10. Turbomaschine (10) suivant la revendication 9, comportant deux hélices (22,24) contrarotatives.

## Patentansprüche

1. Propellernabe mit variabler Flügelverstellung für eine Turbomaschine, umfassend:
• einen polygonalen Ring (234,334) mit ungefähr radialen zylindrischen Aufnahmen (236,336), die um eine Mittelachse (C) des Ringes (234) herum verteilt sind, um die Flügel aufzunehmen,
• ein Rotorelement (243,343) der Turbine der Turbomaschine,
• einen Befestigungsflansch (245,345), der an dem Ring in einer Weise befestigt ist, um ihn mit dem Rotorelement (243,343) zu verbinden,
sowie eine Mehrzahl von Sicherungsrückhalteriegeln (244,344), die mit Spiel in Öffnungen (241,341) sitzen, wobei die Sicherungsrückhalteriegel (244,344) entweder in dem Ring (234,334) oder dem Rotorelement (243,343) anbringbar sind und die Öffnungen (241,341) in dem jeweils anderen, wobei die Nabe **dadurch gekennzeichnet ist, dass** die Öffnungen (241,341) ungefähr parallel zu der Mittelachse (C) sind.

2. Nabe nach Anspruch 1, bei der die Sicherungsrückhalteriegel (244,344) von radialen Platten (242,343) gehalten sind, die an dem Rotorelement (243,343) befestigt sind.

3. Nabe nach Anspruch 2, bei der jede radiale Platte (242) wenigstens zwei Passfedern trägt, die Sicherungsrückhalteriegel (244) bilden und die ungefähr kreisförmigen Querschnitte haben.

4. Nabe nach Anspruch 2, wobei die Sicherungsrückhalteriegel (344) einen nicht-runden Querschnitt aufweisen ebenso wie die Öffnungen (341).

5. Nabe nach Anspruch 2, bei der der Befestigungsflansch (245,345) auf einer Seite des Ringes (234,334) befestigt ist und die Platten (242,342) auf einer in axialer Richtung gegenüberliegenden Seite des Ringes (234,334) platziert sind.

6. Nabe nach Anspruch 2, die weitere Befestigungsmittel (246,346) der Platten (242,342) in einer Richtung parallel zu der Mittelachse (C) des Ringes umfasst.

7. Nabe nach Anspruch 6, bei der die Platten (242,342) ein Relief aufweisen, welches eine formschlüssige Verbindung in einer radialen Ebene mit einem Träger der Platten (242,342) gestattet.

8. Propeller (22,24), der eine Nabe gemäß der vorstehenden Ansprüche umfasst und Flügel, die in den zylindrischen Aufnahmen (236,336) aufgenommen sind.

9. Turbomaschine (10), die wenigstens einen Propeller (22,24) nach Anspruch 8 umfasst.

10. Turbomaschine (10) nach Anspruch 9, die zwei gegenläufige Propeller (22,24) umfasst.

## Claims

1. A propeller hub with variable-pitch blades for a turboengine, comprising:
• a polygonal ring (234, 334) with substantially radial cylindrical recesses (236, 336) distributed about a central axis (C) of the ring (234) for receiving said blades,
• a turbine rotor element (243, 343) of the turboengine, and
• a securing flange (245, 345) attached to the ring so as to connect said ring to said rotor element (243, 343), and
• a plurality of back-up hooks (244, 344) inserted with clearance in openings (241, 341), the back-up hooks (244, 344) being connected to either the ring (234, 334) or the rotor element (243, 343), and the openings (241, 341) being connected to the other one of the two.
the propeller hub being **characterized in that** the opening (241, 341) are substantially parallel to the central axis (C).

2. The hub as claimed in claim 1, wherein said back-up hooks (244, 344) are held by radial plates (242, 342) attached to said rotor element (243, 343).

3. The hub as claimed in claim 2, wherein each radial plate (242) bears at least two pins forming back-up hooks (244) and which have a substantially circular cross section.

4. The hub as claimed in claim 2, wherein said back-up hooks (344) have a non-round cross section, just like said openings (341).

5. The hub as claimed in claim 2, wherein said securing flange (245, 345) is attached to a side of the ring (234, 334), and said plates (242, 342) are placed on a side axially opposite said ring (234, 334).

6. The hub as claimed in claim 2, further comprising means (246, 346) for attaching said plates (242, 342) in a direction parallel to said central axis (C) of the ring.

7. The hub as claimed in claim 6, wherein said plates (242, 342) include a relief that allows positive engagement in a radial plane with a support of said plates (242, 342).

8. A propeller (22, 24) comprising a hub as claimed in any one of the preceding claims, and blades received in cylindrical recesses (236, 336).

9. A turboengine (10) comprising at least one propeller (22, 24) as claimed in claim 8.

10. The turboengine (10) as claimed in claim 9, comprising two counter-rotating propellers (22, 24).
